(19) Europäisches Patentamt
European Patent Office
Office européen des brevets

(11) **EP 4 282 524 A1**

(12) **EUROPEAN PATENT APPLICATION**
published in accordance with Art. 153(4) EPC

(43) Date of publication:
**29.11.2023  Bulletin 2023/48**

(21) Application number: **21921080.4**

(22) Date of filing: **25.01.2021**

(51) International Patent Classification (IPC):
**B01J 23/22** (2006.01)    **B01D 53/86** (2006.01)

(52) Cooperative Patent Classification (CPC):
**B01D 53/86; B01J 23/22; B01J 37/02; B01J 37/08**

(86) International application number:
**PCT/JP2021/002437**

(87) International publication number:
**WO 2022/157972 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **The Chugoku Electric Power Co., Inc.
Hiroshima-shi, Hiroshima 730-8701 (JP)**
• **Tokyo Metropolitan Public University
Corporation
Tokyo 163-0926 (JP)**

(72) Inventors:
• **KIYONAGA Eiji
Hiroshima-shi, Hiroshima 730-8701 (JP)**
• **YOSHIDA Kazuhiro
Hiroshima-shi, Hiroshima 730-8701 (JP)**
• **MORITA Keiichiro
Hiroshima-shi, Hiroshima 730-8701 (JP)**
• **MURAYAMA Toru
Hachioji-shi, Tokyo 192-0397 (JP)**
• **INOMATA Yusuke
Hachioji-shi, Tokyo 192-0397 (JP)**

(74) Representative: **HGF
HGF Europe LLP
Neumarkter Straße 18
81673 München (DE)**

(54) **DENITRATION CATALYST FORMED BODY AND PRODUCTION METHOD THEREFOR**

(57)    Provided is a denitration catalyst formed body that, when used in a selective catalytic reduction reaction in which ammonia serves as the reducing agent, demonstrates excellent denitration efficiency at a low temperature and in the presence of water vapor. This denitration catalyst formed body comprises a denitration catalyst on a support. The denitration catalyst has vanadium oxide as the main component, and contains a second metal. The second metal is at least one metal selected from the group consisting of Li, Na, K, Mg, and Ca. The use of an alkali metal or an alkaline earth metal given above as the second metal leads to the generation of a compound having a crystal phase which demonstrates excellent denitration efficiency at a low temperature and in the presence of water vapor.

FIG. 1

## Description

TECHNICAL FIELD

The present invention relates to a shaped denitration catalyst and a method for producing the shaped denitration catalyst.

BACKGROUND ART

Nitrogen oxides (e.g., NO, $NO_2$, $NO_3$, $N_2O$, $N_2O_3$, $N_2O_4$, $N_2O_5$) are among the pollutants produced by fuel combustion and emitted into the atmosphere. Nitrogen oxides cause acid rain, ozone layer depletion, photochemical smog, and so on and have serious impacts on the environment and human health. Thus, the treatment of nitrogen oxides is an important task.

A known technique for removing nitrogen oxides includes selective catalytic reduction using ammonia ($NH_3$) as a reducing agent ($NH_3$-SCR). As described in Patent Document 1, titanium oxide-supported vanadium oxide catalysts are widely used for the selective catalytic reduction. Titanium dioxide, which has low reactivity with sulfur oxides and is highly stable, is considered the best support.

On the other hand, the content of vanadium oxide supported in such catalysts is only at most around 1 wt% since it can oxidize $SO_2$ to $SO_3$, although it plays a major role in $NH_3$-SCR. Moreover, in the conventional $NH_3$-SCR, there is no choice but to use such titanium oxide-supported vanadium oxide catalysts at high temperatures of 350 to 400°C since they are hardly reactive at low temperatures.

Under such circumstances, a denitration catalyst containing 43 wt% or more of vanadium pentoxide and having a BET specific surface area of 30 $m^2$/g or more has been created and found useful for denitration at 200°C or less (see Patent Document 2).

Patent Document 1: Japanese Unexamined Patent Application, Publication No. 2004-275852
Patent Document 2: PCT International Publication No. WO2018/047356

DISCLOSURE OF THE INVENTION

Problems to be Solved by the Invention

The denitration catalyst described in Patent Document 2 can exhibit good denitration efficiency at 200°C or less. However, there is still room to improve the denitration efficiency in the presence of water vapor because in many practical cases, the denitration catalyst is used under conditions where water vapor coexists with it. The inventors have conducted intensive studies to further improve the denitration catalyst disclosed in Patent Document 2 and, as a result, have found a shaped denitration catalyst capable of exhibiting good denitration efficiency particularly at 200°C or less in the presence of water vapor.

It is an object of the present invention to provide a shaped denitration catalyst capable of exhibiting excellent denitration efficiency at low temperature in the presence of water vapor during selective catalytic reduction using ammonia as a reducing agent.

Means for Solving the Problems

(1) The present invention is directed to a shaped denitration catalyst including: a support; and a denitration catalyst on the support, the denitration catalyst including: vanadium oxide as a main component; and at least one second metal M selected from the group consisting of Li, Na, K, Mg, and Ca.

(2) The present invention is directed to the shaped denitration catalyst according to aspect (1), in which the vanadium oxide is $V_2O_5$, the second metal is at least one of Li, Na, or K, and the denitration catalyst has a molar ratio of the second metal to the vanadium oxide of 0.16 to 0.66.

(3) The present invention is directed to the shaped denitration catalyst according to aspect (1) or (2), in which the denitration catalyst includes a $Na_{0.33}V_2O_5$ crystal phase.

(4) The present invention is directed to the shaped denitration catalyst according to any one of aspects (1) to (3), in which the denitration catalyst has a diffuse reflectance UV-Vis spectrum with a ratio (400 nm : 700 nm) of absorption intensity at 400 nm to absorption intensity at 700 nm of 1:0.45 to 1:0.88, in which the absorption intensities are normalized by the absorption intensity at 400 nm.

(5) The present invention is directed to a denitration catalyst coating liquid for use in producing the shaped denitration catalyst according to any one of aspects (1) to (4), the denitration catalyst coating liquid including at least one selected from the group consisting of the denitration catalyst and a precursor of the denitration catalyst.

(6) The present invention is directed to the denitration catalyst coating liquid according to aspect (5), further including a binder component including Ti.

(7) The present invention is directed to a method for producing the shaped denitration catalyst according to any one of aspects (1) to (4), the method including: applying the denitration catalyst or a precursor of the denitration catalyst to a support; and calcining the denitration catalyst or the precursor on the support.

(8) The present invention is directed to the method according to aspect (7), in which the calcining is performed at a temperature of 260°C to 400°C.

Effects of the Invention

The present invention provides a shaped denitration catalyst capable of exhibiting excellent denitration efficiency at low temperature in the presence of water vapor during selective catalytic reduction using ammonia as a reducing agent.

BRIEF DESCRIPTION OF THE DRAWINGS

FIG. 1 is a graph showing the denitration efficiencies of denitration catalysts each containing a different second metal element;

FIG. 2 is a graph showing the relationship between denitration efficiency and denitration temperature for each of denitration catalysts;

FIG. 3 is a graph showing the relationship between composition ratio and denitration efficiency for denitration catalysts;

FIG. 4 is an X-ray diffraction (XRD) chart showing the relationship between composition ratio and crystal phase for denitration catalysts;

FIG. 5 is a graph showing the relationship between composition ratio and BET specific surface area for denitration catalysts;

FIG. 6 is a graph showing the relationship between calcination temperature and denitration efficiency for denitration catalysts;

FIG. 7 is an XRD chart showing the relationship between calcination temperature and crystal phase for denitration catalysts;

FIG. 8 is a graph showing the results of thermogravimetry-differential thermal analysis (TG-DTA) measurement of denitration catalysts;

FIG. 9 is a graph showing the relationship between calcination temperature and diffuse reflectance UV-Vis spectrum for denitration catalysts;

FIG. 10 is a graph showing the relationship between denitration efficiency and the ratio (400 nm : 700 nm) between absorption intensities normalized in FIG. 9; and

FIG. 11 is a graph showing the relationship between catalyst weight and denitration efficiency for denitration catalysts of examples.

Shaped Denitration Catalyst

An embodiment of the present invention is directed to a shaped denitration catalyst including: a support, such as a honeycomb substrate; and a denitration catalyst on the support. The support may be any type, such as a conventionally known honeycomb substrate. The honeycomb substrate may be, for example, a metal honeycomb substrate including aluminum, tin, stainless steel, or any other metal, or a ceramic honeycomb substrate composed mainly of titanium oxide, cordierite, silicon carbide, silicon nitride, zeolite, or any other ceramic material.

Denitration Catalyst

An embodiment of the present invention is directed to a denitration catalyst including: vanadium oxide as a main component; and a second metal. The second metal is at least one selected from the group consisting of Li, Na, K, Mg, and Ca. The denitration catalyst according to an embodiment of the present invention exhibits higher denitration efficiency even in the presence of water vapor in a low-temperature environment than denitration catalysts used in the conventional art.

Hereinafter, in some cases, denitration efficiency will be expressed as NO conversion rate. The NO conversion rate is expressed by formula (1) below.

$$
\begin{aligned}
\text{NO conversion rate (\%)} = (\text{NO} \\
\text{concentration before denitration reaction} - \text{NO concentration} \\
\text{after denitration reaction})/(\text{NO concentration before} \\
\text{denitration reaction}) \times 100 \quad (1)
\end{aligned}
$$

Vanadium Oxide

Examples of the vanadium oxide used in the denitration catalyst according to an embodiment of the present invention include vanadium(II) oxide (VO), vanadium(III) trioxide ($V_2O_3$), vanadium(IV) tetroxide ($V_2O_4$), and vanadium(V) pentoxide ($V_2O_5$). The vanadium oxide is preferably vanadium pentoxide. During the denitration reaction, the V atom of vanadium pentoxide may have a valency of 2, 3, 4, or 5.

The denitration catalyst preferably contains at least 50 wt%, more preferably at least 60 wt% of vanadium oxide in the form of vanadium pentoxide.

Second Metal

The second metal used in the denitration catalyst according to an embodiment of the present invention is at least one selected from the group consisting of Li, Na, K, Mg, and Ca. By containing the second metal, the denitration catalyst composed mainly of vanadium oxide can exhibit higher denitration efficiency even in the presence of water vapor in a low-temperature environment than conventional denitration catalysts.

Second Metal Content

When the vanadium oxide is vanadium(V) pentoxide ($V_2O_5$), the molar ratio of the second metal to the vanadium(V) pentoxide ($V_2O_5$) is preferably 0.16 to 0.66, more preferably 0.33 to 0.66. The molar ratio of the second metal to the vanadium(V) pentoxide ($V_2O_5$) is preferably 0.16 to 0.66 because the second metal and the vanadium(V) pentoxide ($V_2O_5$) present in such a molar ratio are considered to form a specific crystal phase that will particularly contribute to increasing the denitration efficiency at low temperature in the presence of water vapor.

Crystal Phase of the Denitration Catalyst

The denitration catalyst including Na as the second metal and vanadium (V) pentoxide ($V_2O_5$) preferably includes a $Na_{0.33}V_2O_5$ crystal phase, which is formed by the second metal and the vanadium (V) pentoxide ($V_2O_5$). The $Na_{0.33}V_2O_5$ crystal phase has a monoclinic crystal structure belonging to C2/m. Alternatively, Na and the vanadium (V) pentoxide ($V_2O_5$) may form a $Na_{1.2}V_3O_8$ crystal phase, which has a monoclinic crystal structure belonging to $P2_1/m$.

Specific Surface Area of the Denitration Catalyst

The larger the specific surface area of the denitration catalyst, the more reaction sites are expected to be available, and the higher denitration efficiency is expected to be achievable. However, it is more important that the denitration catalyst according to an embodiment of the present invention has the preferred crystal phase mentioned above than that it just has a large specific surface area.

Calcination Temperature for the Denitration Catalyst

The denitration catalyst according to an embodiment of the present invention is produced, for example, by calcining a precursor including vanadium oxide and a second metal, which will be described in detail later. The calcination temperature is preferably 260 to 400°C, more preferably 300 to 400°C.

At a calcination temperature of 260°C or more, the denitration catalyst precursor including vanadium oxide and a second metal would be decomposed and turned into a $Na_{0.33}V_2O_5$ crystal phase. As the calcination temperature increases, the denitration catalyst comes to contain more $V^{4+}$ due to desorption of O from $V_2O_5$. A favorable ratio should exist between the contents of $V^{5+}$ and $V^{4+}$ in the denitration catalyst since the denitration reaction can proceed through the redox cycle between $V^{5+}$ and $V^{4+}$. At a calcination temperature of 400°C or less, a favorable ratio should be reached between the contents of $V^{5+}$ and $V^{4+}$ in the denitration catalyst.

Diffuse Reflectance UV-Vis Spectrum

The ratio between $V^{5+}$ and $V^{4+}$ in the denitration catalyst can be estimated based on its diffuse reflectance UV-Vis spectrum, which can be measured by known methods. In the diffuse reflectance UV-Vis spectrum, the intensity of absorption at 400 nm corresponds to the amount of $V^{5+}$ in the denitration catalyst. Also in the diffuse reflectance UV-Vis spectrum, the intensity of absorption at 700 nm corresponds to the amount of $V^{4+}$ in the denitration catalyst. In a diffuse reflectance UV-Vis spectrum normalized by the absorption intensity at 400 nm, the ratio of absorption intensity at 400 nm to that at 700 nm (400 nm : 700 nm) can indicate a favorable ratio between the contents of $V^{5+}$ and $V^{4+}$ in the denitration catalyst. The absorption intensity ratio (400 nm : 700 nm) is preferably 1:0.45 to 1:0.88.

Other Substances

The denitration catalyst according to an embodiment of the present invention may contain any other substance that does not impair the advantageous effects of the present invention. For example, the denitration catalyst according to an embodiment of the present invention preferably contains carbon in addition to the substances described above. The presence of carbon as an impurity in the denitration catalyst may cause line or plane distortion in the lattice of the vanadium oxide crystal structure described above to allow the denitration catalyst to exhibit high denitration efficiency in a low-temperature environment. The content of carbon in the denitration catalyst is preferably 0.05 wt% or more and 3.21 wt% or less. The carbon content is more preferably 0.07 wt% or more and 3.21 wt% or less. The carbon content is more preferably 0.11 wt% or more and 3.21 wt% or less. The carbon content is more preferably 0.12 wt% or more and 3.21 wt% or less. The carbon content is more preferably 0.14 wt% or more and 3.21 wt% or less. The carbon content is more preferably 0.16 wt% or more and 3.21 wt% or less. The carbon content is more preferably 0.17 wt% or more and 3.21 wt% or less. The carbon content is more preferably 0.70 wt% or more and 3.21 wt% or less.

The denitration catalyst according to an embodiment of the present invention is preferably used for denitration reaction at 350°C or less. The denitration catalyst is also preferably used for denitration reaction at 300°C or less because it can exhibit high denitration efficiency. The denitration catalyst is also preferably used for denitration reaction at 200°C or less because it will not oxidize $SO_2$ to $SO_3$. The reaction temperature is more preferably 100 to 250°C, even more preferably 160 to 200°C. The reaction temperature may also be 80 to 150°C. At a reaction temperature of 300°C or more, a denitration catalyst including only vanadium(V) pentoxide ($V_2O_5$) may undergo a change, such as a reduction in specific surface area. Such a denitration catalyst cannot be used at a reaction temperature of 300°C or more. The denitration catalyst containing the second metal according to an embodiment of the present invention can maintain high denitration efficiency even at a reaction temperature of 300°C or more.

Denitration Catalyst Coating Liquid

A denitration catalyst coating liquid is used to form the denitration catalyst on a support, such as a honeycomb substrate. The denitration catalyst coating liquid includes the components for the denitration catalyst. The denitration catalyst coating liquid may be a dispersion of a denitration catalyst powder and a binder in water or a thick solution of a denitration catalyst precursor.

The denitration catalyst coating liquid may contain a binder component in addition to the denitration catalyst. The binder component serves to fix and hold the denitration catalyst on a support, which will be described later. The binder component preferably includes Ti. The binder component including Ti allows the denitration catalyst to maintain its catalytic activity successfully.

The binder component may include Ti in the form of a compound, such as an oxide, a complex oxide, a nitride, or an organic or inorganic salt. The binder component preferably includes Ti in the form of titanium dioxide ($TiO_2$). The titanium dioxide ($TiO_2$) may have a rutile, anatase, or brookite crystal structure. The titanium dioxide ($TiO_2$) may be in the form of particles. For example, the particle size of the titanium dioxide ($TiO_2$) is preferably, but not limited to, 5 to 50 nm.

The binder component may contain any inorganic component other than Ti. For example, the binder component may contain Al, Zr, Si, or any other inorganic component as long as the advantageous effects of the present invention are not impaired. As a non-limiting example, the binder component may contain such an inorganic component in the form of a compound, such as an oxide, a complex oxide, a nitride, or an organic or inorganic salt. In addition to the above components, the binder component may contain an organic component for viscosity control. Such an organic component in the binder component may be, for example, at least one of ethylene glycol, carboxymethylcellulose, polyvinyl alcohol, or polyacrylic acid.

Method for Producing the Denitration Catalyst

The denitration catalyst according to an embodiment of the present invention may be produced, for example, as described below. First, a precursor containing the components for the denitration catalyst is prepared. The precursor may contain, for example, an aqueous solution of a vanadate, which is a vanadium oxide source for the denitration catalyst. Examples of the vanadate include ammonium metavanadate, magnesium vanadate, strontium vanadate, barium vanadate, zinc vanadate, lead vanadate, and lithium vanadate.

The second metal for the denitration catalyst may be added in the form of, for example, a nitrate, chloride, sulfate, chelate complex, hydrate, ammonium compound, or phosphate compound of the metal to the aqueous vanadate solution to form the precursor. The chelate complex may be, for example, an oxalic or citric acid complex.

The prepared precursor solution for the denitration catalyst may be evaporated to dryness to give a precursor powder for the denitration catalyst. A calcination step may be performed including calcining the precursor powder at a specific temperature for a specific period of time to produce a powder of the denitration catalyst. In the calcination step, as mentioned above, the calcination temperature is preferably 260 to 400°C, more preferably 300 to 400°C.

Method for Preparing the denitration Catalyst Coating Liquid

The denitration catalyst coating liquid according to an embodiment of the present invention may be prepared by mixing the denitration catalyst and the binder component. Alternatively, the denitration catalyst coating liquid may be a thick solution prepared by evaporating some of the water in the denitration catalyst precursor solution, which is prepared as described above. In this case, the calcination step for the denitration catalyst may be omitted, so that the shaped denitration catalyst can be produced with reduced cost.

A binder component including Ti for the denitration catalyst may be added in the form of a powder of a titanium compound, such as titanium dioxide, to the denitration catalyst coating liquid or may be added in the form of a dispersion or fluid, such as a sol or slurry, of a Ti-containing compound to the denitration catalyst coating liquid. For example, a sol containing titanium dioxide ($TiO_2$) as a dispersoid may be added to the denitration catalyst coating liquid. Such a sol may contain water as a dispersion medium and a strong acid, such as hydrochloric acid or nitric acid, as a dispersion stabilizer or may contain a surface treatment agent, such as silica, an aluminum compound, or a phosphate, with which the titanium dioxide is surface-treated to have dispersion stability at neutral pH.

In addition to the components described above, any other suitable component may be added during the preparation of the denitration catalyst coating liquid. For example, a carbon component, such as ketjen black, ethylene glycol, or a polymer having an oxygen-containing functional group, may be added to the denitration catalyst coating liquid. The polymer having an oxygen-containing functional group may be, for example, polyacrylic acid. In addition to the above components, the denitration catalyst coating liquid may contain a chelating compound. Examples of the chelating compound include compounds having multiple carboxyl groups, such as oxalic acid and citric acid, compounds having multiple amino groups, such as acetylacetonate and ethylenediamine, and compounds having multiple hydroxyl groups, such as ethylene glycol. The denitration catalyst coating liquid may also contain an acid component, such as nitric acid, or an alkali component, such as ammonia, which is for pH adjustment.

Method for Producing the Shaped Denitration Catalyst

An embodiment of the present invention is directed to a method for producing the shaped denitration catalyst, the method including: applying the denitration catalyst coating liquid, which is prepared as described above, to a support, such as a honeycomb substrate; drying the denitration catalyst coating liquid on the support, such as a honeycomb substrate; and calcining the denitration catalyst coating on the support, such as a honeycomb substrate.

The applying step may include uniformly applying the denitration catalyst coating liquid over the surface of the support, such as a honeycomb substrate, in which the surface includes a porous interior surface. The applying step may be performed in any suitable manner. In general, the applying step may be performed using a known catalyst coating method, such as a method of dipping the support, such as a honeycomb substrate, in the denitration catalyst coating liquid prepared as described above or a spray coating method.

The drying step may include drying the catalyst coating liquid by evaporating water and any other solvent from the catalyst coating liquid. The drying temperature is typically, but not limited to, 120°C.

The calcining step may include calcining the denitration catalyst coating on the support, such as a honeycomb substrate, at a specific temperature. For example, the calcining temperature is preferably 260°C to 400°C, more preferably 300°C to 400°C.

The embodiments described above are not intended to limit the present invention and may be altered or modified within the scope where the object of the present invention can be achieved, and such alterations or modifications will fall within the scope of the present invention.

EXAMPLES

Hereinafter, the present invention will be more specifically described with reference to examples. The examples are not intended to limit the present invention.

Preparation of Denitration Catalyst

A precursor complex solution was prepared by dissolving ammonium vanadate ($NH_4VO_3$) and oxalic acid (($COOH)_2$) in pure water. A precursor solution for a denitration catalyst was prepared by adding, to the precursor complex solution, a nitrate of Na (second metal) in such an amount as to satisfy the composition formula $Na_{0.66}V_2O_5$ and mixing them. The precursor solution was evaporated to dryness, and the dry product was calcined twice at a temperature of 300°C for a period of 4 hours in the air to form a denitration catalyst of an example. Other examples and a comparative example were performed to prepare denitration catalysts by the same procedure except that a different second metal or a different Na content was used in each of the other examples and that no second metal was added in the comparative example.

Denitration Efficiency and Presence or Absence of Second Metal

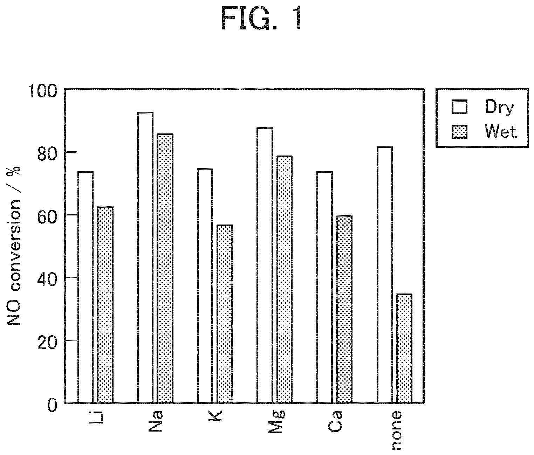

FIG. 1 is a graph comparing the denitration efficiency of the denitration catalyst of each of the examples, in which vanadium(V) pentoxide ($V_2O_5$) and Li, Na, K, Mg, or Ca were used as the matin component and the second metal, respectively, with that of the denitration catalyst of the comparative example (represented by "none"), in which only vanadium(V) pentoxide ($V_2O_5$) was used. In FIG. 1, the vertical axis represents NO conversion rate. To form the denitration catalyst, the alkali metal Li, Na, or K was used as the second metal in such an amount as to satisfy the composition formula $M_{0.66}V_2O_5$, in which M represents the second metal. To form the denitration catalyst, the alkaline-earth metal Mg or Ca was used as the second metal in such an amount as to satisfy the composition formula $M_{0.33}V_2O_5$, in which M represents the second metal. The reaction was performed at a temperature of 150°C using the catalyst in an amount of 0.375 g. In the reaction represented by "Dry" in FIG. 1, the reactant gas was an Ar gas containing NO (250 ppm), $NH_3$ (250 ppm), and $O_2$ (4 vol%), and the gas flow rate was 250 mL/min. In the reaction represented by "Wet" in FIG. 1, the reactant gas further contained $H_2O$ (10 vol%) in addition to the components of the reactant gas in the "Dry" case.
FIG. 1 shows that the denitration catalyst of each of the examples, which includes vanadium oxide as the main component and Li, Na, K, Mg, or Ca as the second metal, exhibits a higher NO conversion rate particularly in the presence of water vapor than the denitration catalyst of the comparative example, which only includes vanadium oxide.

Second Metal Type, Reaction Temperature, and Denitration Efficiency

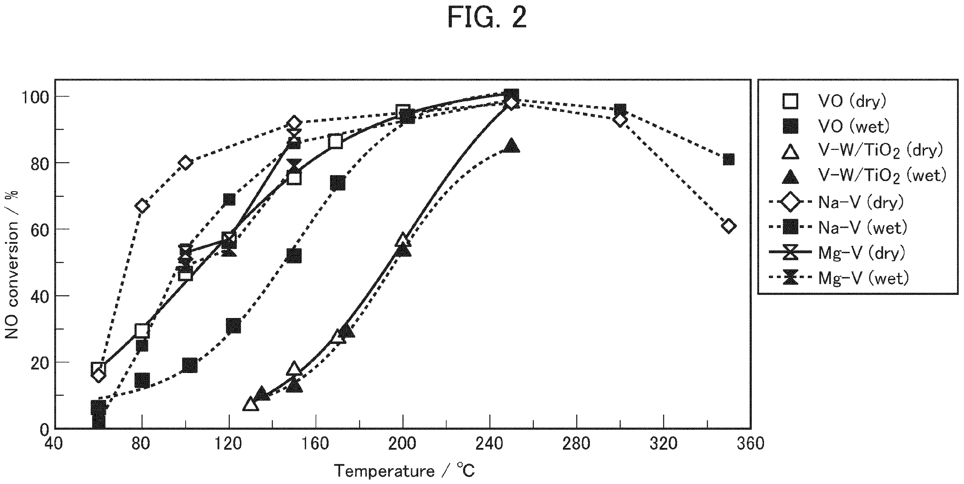

FIG. 2 is a graph showing the relationship between reaction temperature and denitration efficiency (NO conversion rate) for denitration catalysts of examples and comparative examples, in which vanadium(V) pentoxide ($V_2O_5$) is the main component. In FIG. 2, "VO" represents a catalyst of a comparative example, which only includes vanadium(V) pentoxide ($V_2O_5$). "V-W/$TiO_2$" represents a catalyst of another comparative example, which is a mimic of an industrial catalyst and has the composition of 1 wt% $V_2O_5$ and 5 wt% $WO_3$/$TiO_2$. "Na-V" and "Mg-V" represent denitration catalysts of examples, which include vanadium(V) pentoxide ($V_2O_5$) as the main component and Na and Mg respectively as the second metal and have the same composition as that shown in FIG. 1. The reactions represented by "Dry" and "Wet" in FIG. 2 were performed under the same gas conditions as those shown in FIG. 1 except that the reaction temperature was changed, during which the NO conversion rate was measured under the same conditions as those shown in FIG. 1.
FIG. 2 shows that the denitration catalysts each including vanadium oxide as the main component and Na or Mg as the second metal exhibit a higher NO conversion rate particularly at a low temperature of 120°C or less than the denitration catalysts of the comparative examples. It has also been found that the denitration catalyst of the comparative example including only vanadium(V) pentoxide ($V_2O_5$) cannot operate at a reaction temperature of 300°C or more while the denitration catalysts of the examples exhibit a high NO conversion rate of at least 80% even at a reaction temperature of at least 300°C or approximately 350°C.

Second Metal Content

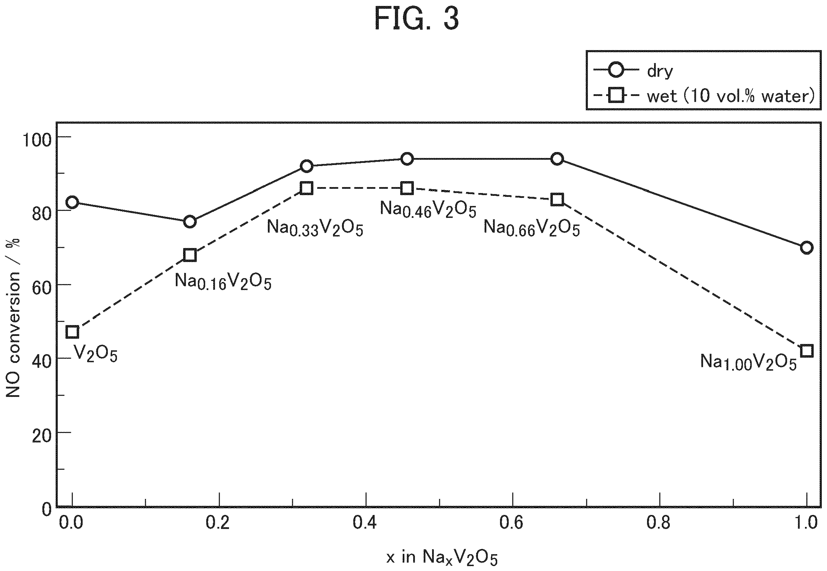

FIG. 3 is a graph showing the relationship between the NO conversion rate and the composition of denitration catalysts including vanadium(V) pentoxide ($V_2O_5$) as the vanadium oxide component and Na as the second metal. In FIG. 3, the horizontal axis represents the molar ratio of Na to vanadium pentoxide, and the vertical axis represents the NO conversion rate. The reactions represented by "Dry" and "Wet" in FIG. 3 were performed under the same conditions as those shown in FIG. 1. FIG. 3 shows that denitration catalysts with a molar ratio of Na to vanadium(V) pentoxide ($V_2O_5$) in the range of 0.16 to 0.66 can exhibit high NO conversion rates.

Crystal Phase of Denitration Catalyst

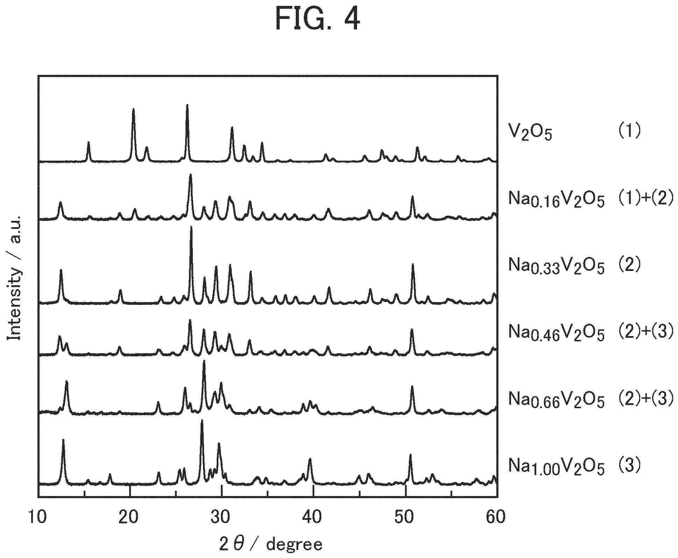

FIG. 4 is a graph showing the XRD charts of denitration catalysts containing Na as the second metal and having different Na-to-vanadium(V) pentoxide ($V_2O_5$) molar ratios. As shown in FIG. 3, denitration catalysts with the compositions: $V_2O_5$, $Na_{0.33}V_2O_5$, and $Na_{1.00}V_2O_5$ were observed to show sets of peaks attributed to the single crystal phases of $V_2O_5$ (1), $Na_{0.33}V_2O_5$ (2), and $Na_{1.2}V_3O_8$ (3), respectively. Another denitration catalyst with the composition $Na_{0.16}V_2O_5$ was observed to show peaks attributed to both the crystal phases (1) and (2). Further denitration catalysts with the compositions: $Na_{0.46}V_2O_5$ and $Na_{0.66}V_2O_5$ were observed to show sets of peaks attributed to both the crystal phases (2) and (3). Thus, the results shown in FIGS. 3 and 4 suggest that denitration catalysts can exhibit high denitration efficiency when they include the $Na_{0.33}V_2O_5$ crystal phase (2).

Specific Surface Area of Denitration Catalyst

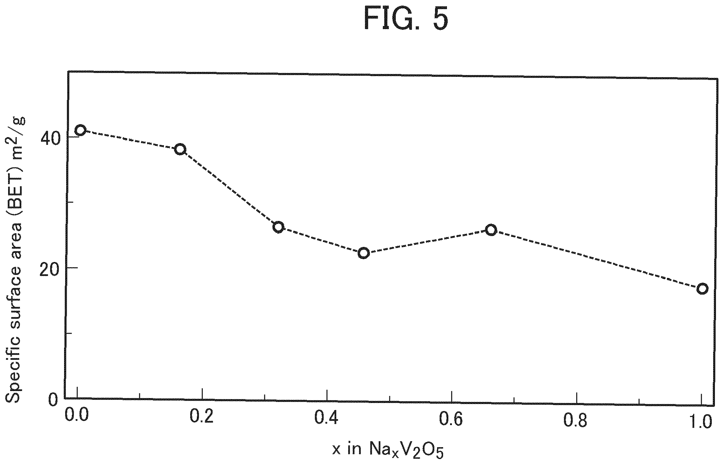

FIG. 5 is a graph showing the relationship between the specific surface area and composition of denitration catalysts. In FIG. 5, the horizontal axis represents the composition of denitration catalysts including vanadium(V) pentoxide ($V_2O_5$) as the vanadium oxide component and Na as the second metal, and the vertical axis represents the BET specific surface area ($m^2/g$) of the denitration catalysts. FIG. 5 indicates that the specific surface area of the denitration catalyst decreases with increasing Na content. On the other hand, the results in FIGS. 3 and 5 taken together show that the specific surface area has no correlation with the NO conversion rate particularly when the ratio of Na to vanadium(V) pentoxide ($V_2O_5$) is 0.66 or less. This indicates that the presence of the $Na_{0.33}V_2O_5$ crystal phase (2) in the denitration catalyst more contributes to increasing the denitration efficiency than a simple increase in the specific surface area of the denitration catalyst.

Calcination Temperature for Denitration Catalyst

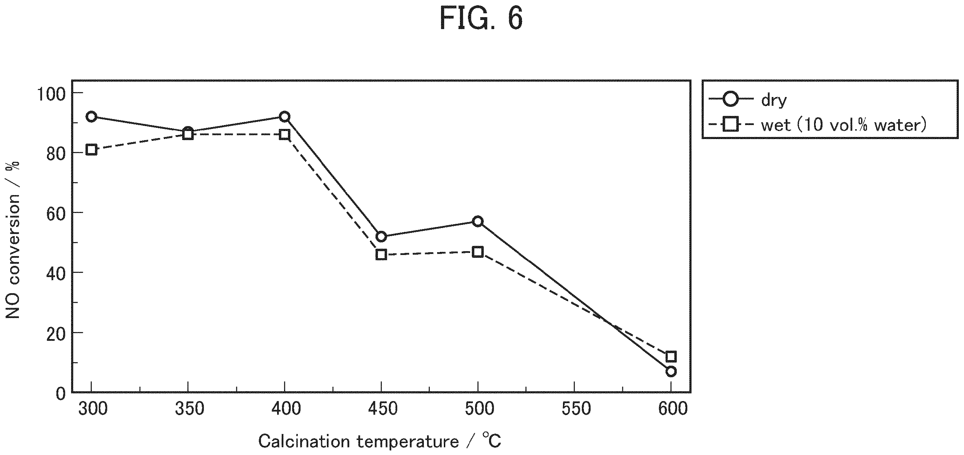

FIG. 6 is a graph showing the relationship between calcination temperature and NO conversion rate for denitration catalysts. In FIG. 6, the vertical axis represents the NO conversion rate, and the horizontal axis represents the calcination temperature (°C) for the denitration catalysts. FIG. 6 indicates that calculation at a temperature of 300 to 400°C can produce denitration catalysts that exhibit high NO conversion rates.

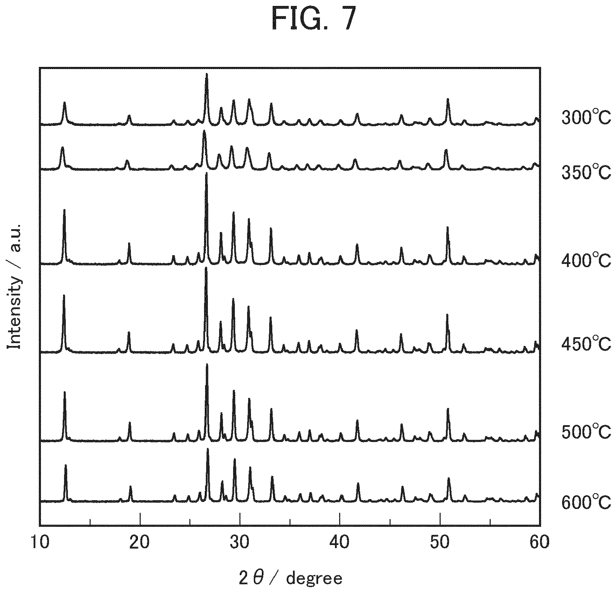

FIG. 7 is a graph showing the XRD charts of denitration catalysts produced at different calcination temperatures. The denitration catalysts shown in FIG. 7 have the composition $Na_{0.33}V_2O_5$. The results in FIG. 7 show that peaks attributed to the $Na_{0.33}V_2O_5$ crystal phase (2) were observed for all calcination temperatures. This indicates that the variations in NO conversion rate between different calcination temperatures are not attributable to the crystal phase type.

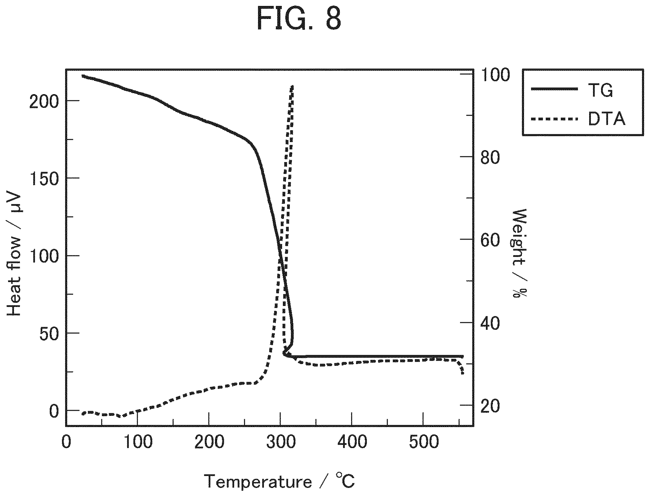

FIG. 8 is a chart showing the results of TG-DTA (thermogravimetry-differential thermal analysis) measurement of how a denitration catalyst precursor with the composition $Na_{0.33}V_2O_5$ changes in weight when heated. In FIG. 8, the solid line indicates the TG (thermogravimetric analysis) curve, and the broken line indicates the DTA (differential thermal analysis) curve. In FIG. 8, the right vertical axis represents the ratio (%) of the sample weight to its initial weight, which corresponds to the TG curve, and the left vertical axis represents the difference ($\mu V$) between the temperatures of the sample and the reference material, which corresponds to the DTA curve. In FIG. 8, the horizontal axis represents temperature (°C). The resulting TG curve in FIG. 8 indicate that significant weight loss occurs from 260°C to 300°C. From the resulting DTA curve, a large exothermic peak is observed at around 300°C. This suggests that the $Na_{0.33}V_2O_5$ crystal phase will form when the precursor is calcined at a temperature of at least 260°C.

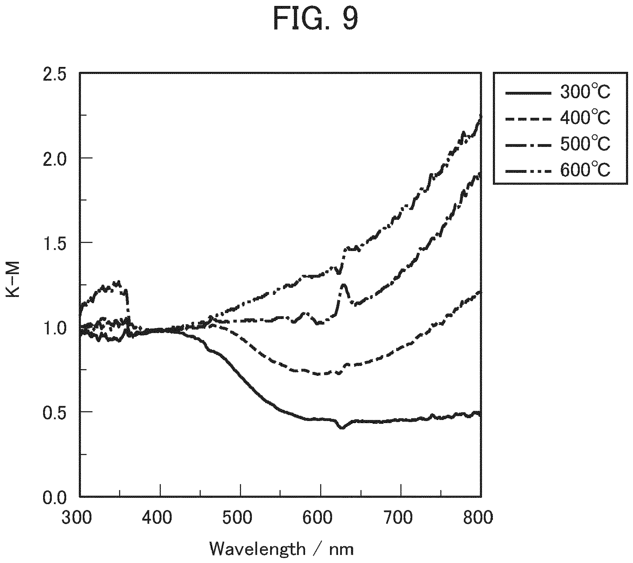

FIG. 9 is a graph showing the diffuse reflectance UV-Vis spectra of denitration catalysts produced by calcining a denitration catalyst precursor with the composition $Na_{0.33}V_2O_5$ at temperatures of 300°C, 400°C, 500°C, and 600°C, in which the spectra have been normalized by the absorption intensity at a wavelength of 400 nm. In FIG. 9, the vertical axis represents the K-M function used for quantitative analysis, and the horizontal axis represents wavelength (nm). The diffuse reflectance UV-Vis spectra were measured with an ultraviolet-visible-near infrared spectrophotometer (UV-3100PC manufactured by Shimadzu Corporation). From FIG. 9, the ratio of absorption intensity at 400 nm to that at 700 nm (400 nm : 700 nm) was calculated to be 1:0.45 for the denitration catalyst produced by calcination at a temperature of 300°C. The ratio (400 nm : 700 nm) was also calculated to be 1:0.88, 1:1.35, and 1:1.69, respectively, for the denitration catalysts produced by calcination at temperatures of 400°C, 500°C, and 600°C.

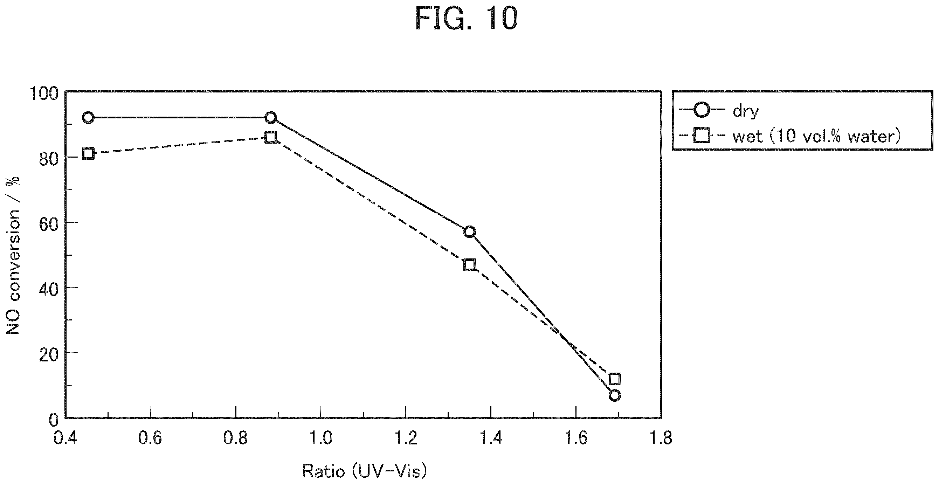

FIG. 10 is a graph combining the results shown in FIGS. 6 and 9. In FIG. 10, the vertical axis represents NO conversion rate (%), and the horizontal axis represents the ratio of absorption intensity at wavelength 700 nm to that at wavelength 400 nm (700 nm/400 nm). The results in FIG. 10 indicate that the absorption intensity ratio (400 nm : 700 nm) is preferably 1:0.45 to 1:0.88.

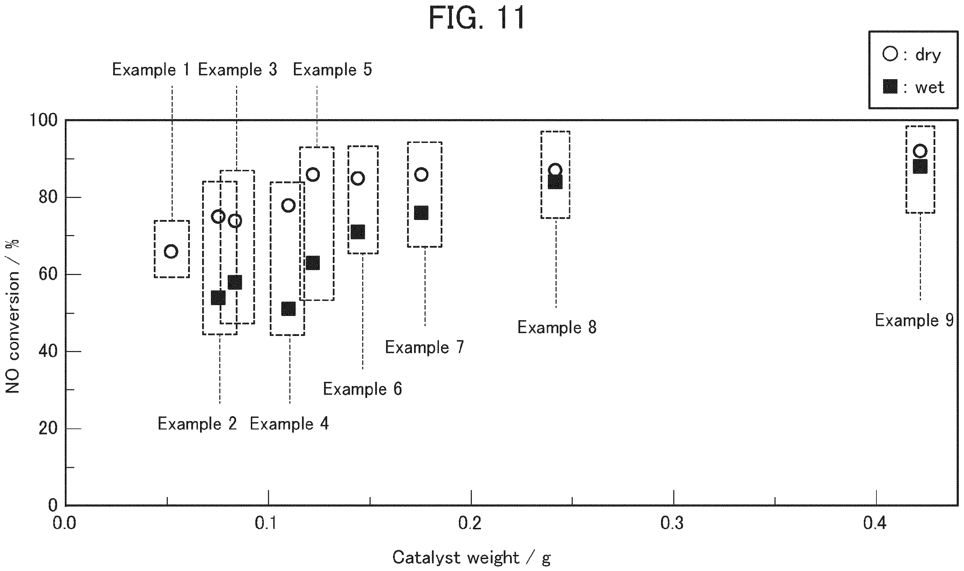

FIG. 11 is a graph showing the relationship between the amount of the catalyst supported in the shaped denitration catalyst of each of examples and the NO conversion rate. In FIG. 11, the vertical axis represents the NO conversion rate (%), and the horizontal axis represents the amount (g) of the supported catalyst. In each of the examples, the shaped denitration catalyst was obtained by a process including: preparing a denitration catalyst coating liquid; applying the denitration catalyst coating liquid to a honeycomb-shaped material (5 × 5 × 50 mm); drying the coating liquid into a solid coating; and calcining the solid coating at a temperature of 300°C for 4 hours in the air, in which the denitration catalyst coating liquid contained a denitration catalyst with the composition $Na_{0.33}V_2O_5$ and optionally a binder component or the denitration catalyst coating liquid was a thick solution of a precursor of the denitration catalyst. The NO conversion rate (%) shown in FIG. 11 was measured under the same conditions as those shown in FIG. 1 except that the gas flow rate was 150 mL/min. The amount of the supported catalyst was adjusted by controlling the number of times of application of the denitration catalyst coating liquid and the number of times of evaporation to dryness. The composition of the denitration catalyst coating liquid in each of the examples is as shown in Table 1 below.

[Table 1]

|  | Binder component | Water | KB | EG |
|---|---|---|---|---|
| Example 1 | TKS202 | 18ml | - | 5ml |
| Example 2 | TKS202 | 9ml | 0.5g | - |
| Example 3 | TKS202 | 9ml | - | - |
| Example 4 | TKS202 | 9ml | - | 5ml |
| Example 5 | - | - | - | - |
| Example 6 | - | - | - | - |
| Example 7 | TKS202 | 4.5ml | - | 5ml |
| Example 8 | TKS202 | 9ml | - | - |
| Example 9 | TKS202 | 9ml | - | - |

In Table 1, "TKS202" represents titanium dioxide sol (Tayca Corporation) used as a binder component, "KB" represents ketjen black, and "EG" represents ethylene glycol. The denitration catalyst coating liquid in Example 5 contained only the denitration catalyst with no binder component. The denitration catalyst coating liquid in Example 6 was a thick solution prepared by concentrating an aqueous solution (with a vanadium (V) concentration of 0.83 mol/L) of a denitration catalyst precursor with the composition $Na_{0.33}V_2O_5$ to approximately 1/5 of its original volume.

The results in FIG. 11 show that the shaped denitration catalysts of the examples exhibit NO conversion rates approximately proportional to the amount of the supported catalyst. This indicates that the shaped denitration catalyst of the example in which the denitration catalyst coating liquid contains no binder component and the shaped denitration catalyst of the example in which the denitration catalyst coating liquid is a thick solution of a denitration catalyst precursor also exhibit a similar level of NO conversion rate to that of the shaped denitration catalysts of the other examples.

**Claims**

1. A shaped denitration catalyst comprising: a support; and a denitration catalyst on the support,

   the denitration catalyst comprising: vanadium oxide as a main component; and a second metal M,
   the second metal M being at least one selected from the group consisting of Li, Na, K, Mg, and Ca.

2. The shaped denitration catalyst according to claim 1,

   wherein the vanadium oxide is $V_2O_5$,
   wherein the second metal is at least one of Li, Na, or K, and
   wherein the denitration catalyst has a molar ratio of the second metal to the vanadium oxide of 0.16 to 0.66.

3. The shaped denitration catalyst according to claim 1 or 2, wherein the denitration catalyst comprises a $Na_{0.33}V_2O_5$

crystal phase.

4. The shaped denitration catalyst according to any one of claims 1 to 3, wherein the denitration catalyst has a diffuse reflectance UV-Vis spectrum with a ratio (400 nm : 700 nm) of absorption intensity at 400 nm to absorption intensity at 700 nm of 1:0.45 to 1:0.88, wherein the absorption intensities are normalized by the absorption intensity at 400 nm.

5. A denitration catalyst coating liquid for use in producing the shaped denitration catalyst according to any one of claims 1 to 4, the denitration catalyst coating liquid comprising at least one selected from the group consisting of the denitration catalyst and a precursor of the denitration catalyst.

6. The denitration catalyst coating liquid according to claim 5, further comprising a binder component comprising Ti.

7. A method for producing the shaped denitration catalyst according to any one of claims 1 to 4, the method comprising:

applying the denitration catalyst or a precursor of the denitration catalyst to a support; and
calcining the denitration catalyst or the precursor on the support.

8. The method according to claim 7, wherein the calcining is performed at a temperature of 260°C to 400°C.

# FIG. 1

# FIG. 2

EP 4 282 524 A1

## FIG. 3

EP 4 282 524 A1

# FIG. 4

# FIG. 5

FIG. 6

# FIG. 7

# FIG. 8

## FIG. 9

FIG. 10

FIG. 11

**EP 4 282 524 A1**

## INTERNATIONAL SEARCH REPORT

| International application No. |
|---|
| PCT/JP2021/002437 |

**A. CLASSIFICATION OF SUBJECT MATTER**
B01J 23/22(2006.01)i; B01D 53/86(2006.01)i
FI: B01J23/22 A ZAB; B01D53/86 222
According to International Patent Classification (IPC) or to both national classification and IPC

**B. FIELDS SEARCHED**

Minimum documentation searched (classification system followed by classification symbols)
B01J21/00-38/74; B01D53/86-53/90,53/94-53/96

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)
CAplus/REGISTRY (STN); JSTPlus/ JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2015-182067 A (NIPPON SHOKUBAI CO., LTD.) 22 October 2015 (2015-10-22) claim 1, paragraphs [0015]-[0024], examples 1-6 | 1-5, 7, 8<br>4, 6, 8 |
| X<br>Y | JP 2005-144299 A (NIPPON SHOKUBAI CO., LTD.) 09 June 2005 (2005-06-09) claims 2, 3, paragraphs [0019]-[0020], [0023]-[0024], [0046]-[0055] | 1-3, 5, 7<br>4, 6, 8 |
| Y | JP 2004-81995 A (NIPPON SHOKUBAI CO., LTD.) 18 March 2004 (2004-03-18) claims 1, 2, paragraphs [0008]-[0011], [0029], [0036], [0039] | 4 |
| X | RULIANG, Ning et al., Applicability of V2O5-WO3/riO2 Catalysts for the SCR Denitrification of Alumina Calcining Flue Gas, Catalysts, 2019, vol. 9, p. 220, 1-11, DOI:10.3390/catal9030220 abstract, 2.2, 2.3, 3.1, fig. 4, table 1 | 1, 4, 5, 7 |

☒ Further documents are listed in the continuation of Box C.    ☒ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 March 2021 (22.03.2021) | 06 April 2021 (06.04.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

## INTERNATIONAL SEARCH REPORT

| | International application No. |
|---|---|
| | PCT/JP2021/002437 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 5-154351 A (BABCOCK-HITACHI K. K.) 22 June 1993 (1993-06-22) claims 3, 4, paragraph [0009] | 6 |
| A | WO 2018/047378 A1 (THE CHUGOKU ELECTRIC POWER CO., INC.) 15 March 2018 (2018-03-15) claims | 1-8 |

Form PCT/ISA/210 (continuation of second sheet) (January 2015)

INTERNATIONAL SEARCH REPORT

Information on patent family members

International application No.

PCT/JP2021/002437

| Patent Documents referred in the Report | Publication Date | Patent Family | Publication Date |
|---|---|---|---|
| JP 2015-182067 A | 22 Oct. 2015 | (Family: none) | |
| JP 2005-144299 A | 09 Jun. 2005 | (Family: none) | |
| JP 2004-81995 A | 18 Mar. 2004 | (Family: none) | |
| JP 5-154351 A | 22 Jun. 1993 | (Family: none) | |
| WO 2018/047378 A1 | 15 Mar. 2018 | US 2019/0054448 A1 claims EP 3511072 A1 CN 108472628 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004275852 A

- WO 2018047356 A